# EUROPÄISCHE PATENTSCHRIFT

(11) **EP 1 148 276 B1**
(45) Veröffentlichungstag und Bekanntmachung des Hinweises auf die Patenterteilung: **14.06.2006**
(21) Anmeldenummer: 01108568.5
(22) Anmeldetag: 05.04.2001
(51) Int. Cl.: F16J 15/08

(54) **Verfahren zum Aufbringen einer Überhöhung auf eine Metallage einer Zylinderkopfdichtung und Zylinderkopfdichtung**
Method for applying a raising to a metallic plate of a cylinder head gasket and cylinder head gasket
Procédé pour appliquer une sur-épaisseur à une plaque métallique d'un joint de culasse et joint de culasse

(30) Priorität: 20.04.2000 DE 10019715
(43) Veröffentlichungstag der Anmeldung: 24.10.2001
(73) Patentinhaber: ElringKlinger AG, 72581 Dettingen (DE)
(72) Erfinder: Zerfass, Hans-Rainer, Dr., 65232 Taunusstein (DE); Winkovic, Viktor, 65510 Idstein (DE)
(74) Vertreter: Sparing Röhl Henseler Patentanwälte European Patent Attorneys

(56) Entgegenhaltungen:
- EP-A- 0 510 666
- EP-A- 0 867 645
- DE-A- 3 719 484
- DE-A- 3 930 120
- DE-A- 19 605 871
- DE-A- 19 611 092
- DE-C- 3 423 286
- US-A- 5 888 638

## Beschreibung

Die Erfindung betrifft ein Verfahren zum Aufbringen einer Überhöhung auf eine Metallage einer Zylinderkopfdichtung nach dem Oberbegriff des Anspruchs 1 sowie eine Zylinderkopfdichtung nach dem Oberbegriff des Anspruchs 9.

Aus DE-A-196 11 092 ist es bekannt, eine Überhöhung auf eine Metallage einer metallischen Zylinderkopfdichtung für eine Brennkraftmaschine mit mindestens einem Funktionsblech, das mit einer Öffnung oder mehreren nebeneinander angeordneten Öffnungen entsprechend den Brennkammern der Brennkraftmaschine versehen ist, wobei in dem mindestens einen Funktionsblech um jede Öffnung herum mit Abstand zu dieser unter Belassung eines geraden Blechabschnitts im Öffnungsrandbereich eine Sicke vorgesehen ist, für die ein koaxial zur Sicke verlaufender, durch die Überhöhung gebildeter Federwegbegrenzer vorgesehen ist, aufzubringen, wobei die Überhöhung aus einer einen mit mineralischem Füllstoff stark gefüllten, ausreichend temperaturbeständigen, duroplastischen Kunststoff besteht. Ein derartiger Federwegbegrenzer hat die Forderung zu erfüllen, daß er sich unter der Druck- und Wärmebelastung am -Brennkammerrand nicht verformen darf, d.h. praktisch unelastisch ist. Entsprechende duroplastische Kunststoffe haben jedoch dann den Nachteil, daß sie spröde sind, so daß der durch die Überhöhung gebildete Federwegbegrenzer bei der Handhabung und beim Verbau brechen kann.

Aus EP-A-867 645 ist es bekannt, dünne Mikroabdichtungsschichten auf Metallagen von Zylinderkopfdichtungen aus einem Elastomer unter Zwischenschaltung einer Haftvermittlungsschicht etwa aus einem Silan auszubilden. Derartige Schichten sind allerdings verformbar, d.h. daß sie unter Betriebsbedingungen kriechen, verquetscht werden und zwecks Mikroabdichtung oberflächliche Lücken füllen.

Aufgabe der Erfindung ist es, ein Verfahren nach dem Oberbegriff des Anspruchs 1 und eine Zylinderkopfdichtung nach dem Oberbegriff des Anspruchs 10 zu schaffen, die es ermöglichen, als Überhöhungen ausgebildete Federwegbegrenzer aus Kunststoff auszubilden, die bei der Druck- und Wärmebelastung, der sie in einer Brennkraftmaschine ausgesetzt sind, im wesentlichen unelastisch sind, und bei der Hanhabung und beim Verbau nicht brechen.

Diese Aufgabe wird entsprechend dem kennzeichnenden Teil des Anspruchs 1 gelöst.

Durch das Verwenden von mit einem Silan, etwa einem Amino- oder EpoxySilan, oberflächenbehandelten Füllstoffen zum Erzeugen eines hochgefüllten Elastomeren, aus dem Überhöhungen etwa durch Siebdruck oder automatischen Raupenauftrag auf einer oder mehreren Metallagen einer ein- oder mehrlagigen metallischen Zylinderkopfdichtung hergestellt werden, ergeben sich überraschend Überhöhungen, die die beiden gegensätzlichen Forderungen erfüllen. Außerdem ergibt sich so ein sehr einfaches, kostengünstiges Verfahren zur Ausbildung der Überhöhungen, das es ohne weiteres ermöglicht, gleichmäßig dicke und breite als auch in Dicke und Breite variierende Schichten durch entsprechendes Auslegen eines zum Siebdruck verwendeten Siebs zu verwenden.

Die Druckfestigkeit des Elastomers wird durch entsprechende Füllung mit dem oberflächenbehandelten Füllstoff erizielt. Hierbei ist ein Verhältnis Kunststoff/Füllstoff von 1:1 bis 1:5, insbesondere 1:2,5 bis 1:4, zweckmäßig. Als Füllstoff wird vorzugsweise einer eingesetzt, der einen geringen thermischen Ausdehnungskoeffizienten besitzt, z.B. Quarzmehl (besonders bevorzugt), Aluminiumoxid, Rutil, Dolomit oder Wollastonit.

Besonders geeignete Elastomere sind Fluorkautschuk oder Fluorsilikonkautschuk. Typische lösungsmittelhaltige Rezepturen können wie folgt aufgebaut sein:

| | |
|---|---|
| Fluorkautschuklösung in Butoxyl (36%ig) | 50,0 Gew.-Teile |
| Quarzmehl (mit Epoxysilan beschichtet) | 38,0 Gew.-Teile |
| Verlaufshilfsmittel | 0,15 Gew.-Teile |
| Vernetzer | 0,15 Gew.-Teile |
| Haftungspromotor Silan DAMO | 0,50 Gew.-Teile |

Überraschenderweise hat sich gezeigt, daß Zylinderkopfdichtungen mit derartig zusammengesetzten Überhöhungen den Belastungen im motorischen Betrieb standhalten.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

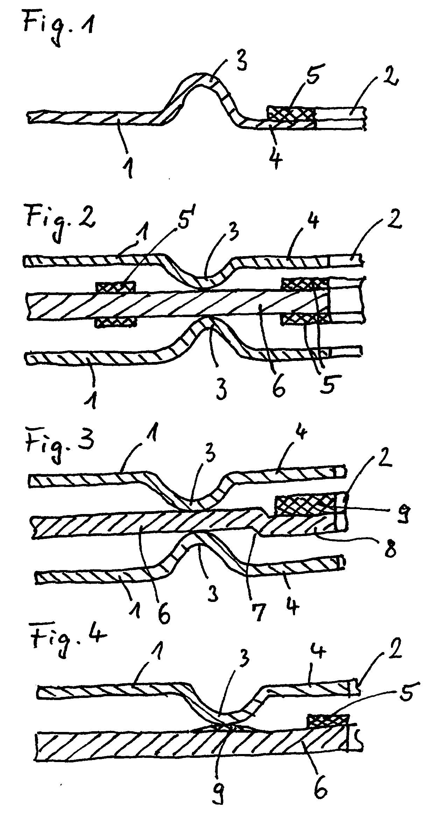

Fig. 1 bis 4 zeigen schematisch und ausschnittweise Schnitte von verschiedenen Ausführungsformen von Zylinderkopfdichtungen.

Die in Fig. 1 dargestellte Zylinderkopfdichtung umfaßt ein Funktionsblech 1, das mit einer oder mehreren Öffnungen 2 entsprechend den Brennkammern der zugehörigen Brennkraftmaschine sowie nicht dargestellten Schraubendurchtrittslöchern für Zylinderkopfschrauben und üblicherweise mit ebenfalls nicht dargestellten Durchtrittsöffnungen für Kühlwasser bzw. Öl versehen ist.

Das gewöhnlich aus Federstahl hergestellte und ansonsten plane Funktionsblech 1 ist mit Sicken 3 versehen, die mit Abstand unter Belassung eines geraden Blechabschnitts 4 im Randbereich der jeweiligen Öffnung 2 angeordnet sind.

Benachbart zum Brennkammerrand ist ein gleichzeitig zur brennraumseitigen Überhöhung der Zylinderkopfdichtung dienender Federwegbegrenzer 5 aus Elastomer zum Schutz der Sicke 3 gegen übermäßige mechanische Verformung auf derjenigen Seite des Funktionsblechs 1 beispielsweise im Siebdruckverfahren aufgebracht, zu der die Sicke 3 gewölbt ist.

Bei der in Fig. 2 dargestellten Ausführungsform sind zwei Funktionsbleche 1 als Deckbleche mit ihren Sicken 3 spielgelsymmetrisch zueinander und einander zugekehrt vorgesehen, wobei zwischen den Funktionsblechen 1 ein planes Trägerblech 6 angeordnet ist. Das Trägerblech 6 ist benachbart zum jeweiligen Brennkammerrand beidseitig mit jeweils einem Federwegbegrenzer 5 aus Elastomer versehen, um die beiden Sicken 3 der beiden Funktionsbleche zu schützen und die brennkammerseitige Überhöhung zu bewirken. Die Federwegbegrenzer 5 sind hierbei symmetrisch zur Mittel- oder Symmetrieebene der Zylinderkopfdichtung angeordnet.

Zusätzlich können auch radial außenseitig der jeweiligen Sicke 3 zusätzliche Federwegbegrenzer 5' vorgesehen sein, die ebenfalls aus Elastomer bestehen und gleichzeitig mit den radial innenseitigen Federwegbegrenzern 5 im Siebdruckverfahren aufgebracht sind.

Anstelle des Aufbringens der Federwegbegrenzer 5 am Trägerblech 6 können auch zwei Funktionsbleche 1 mit Federwegbegrenzem 5 gemäß Fig. 1 verwendet werden.

Eines der Funktionsbleche 1 und die diesem zugewandten Federwegbegrenzer 5, 5' können auch bei der Ausführungsform von Fig. 2 fehlen.

Wie in Fig. 3 dargestellt, kann das Trägerblech 6 jeweils mit einer um die jeweilige Öffnung 2 umlaufenden Kröpfung 7 versehen sein, in deren Bereich ein im Siebdruckverfahren hergestellter, ringförmiger Elastomerauftrag 9 so aufgebracht ist, daß der abgekröpfte Bereich 8 des Trägerblechs 6 und der Elastomerauftrag 9 vorzugsweise im wesentlichen mittig zwischen den beiden Funktionsblechen 1 angeordnet sind. Hierbei wird der Federwegbegrenzer durch den Elastomerauftrag 9 und den abgekröpften Bereich 8 des Trägerblechs 6 gebildet.

Bei der in Fig. 4 dargestellten, hier zweilagig ausgeführten Ausführungsform ist zusätzlich vorgesehen, den Aufstandsbereich der Sicke 3 auf dem Trägerblech 6 in Umfangsrichtung zu ändern, zu welchem Zweck eine Überhöhung in Form eines durch Siebdruck aufgebrachten Elastomerauftrags auf dem Trägerblech 6 mit in Umfangsrichtung variierender Stärke im Aufstandsbereich der Sicke 3 vorgesehen ist.

## Patentansprüche

1. Verfahren zum Aufbringen einer Überhöhung auf eine Metallage einer metallischen Zylinderkopfdichtung für eine Brennkraftmaschine mit mindestens einem Funktionsblech (1), das mit einer Öffnung (2) oder mehreren nebeneinander angeordneten Öffnungen (2) entsprechend den Brennkammern der Brennkraftmaschine versehen ist, wobei in dem mindestens einen Funktionsblech (1) um jede Öffnung (2) herum mit Abstand zu dieser unter Belassung eines geraden Blechabschnitts (4) im Öffnungsrandbereich eine Sicke (3) vorgesehen ist, für die ein koaxial zur Sicke (3) verlaufender, durch die Überhöhung gebildeter Federwegbegrenzer (5; 5'; 8, 9) vorgesehen ist, wobei die Überhöhung aus einer einen mit mineralischem Füllstoff stark gefüllten Kunststoff enthaltenden Mischung hergestellt wird, **dadurch gekennzeichnet, daß** die Mischung aus einem Elastomer mit einem mittels eines Silans oberflächenbehandelten Füllstoff im Verhältnis Elastomer/Füllstoff von 1:1 bis 1:5 eingesetzt wird.

2. Verfahren nach Anspruch 1, **dadurch gekennzeichnet, daß** als Elastomer Fluorkautschuk oder Fluorsilikonkautschuk verwendet wird.

3. Verfahren nach Anspruch 1 oder 2, **dadurch gekennzeichnet, daß** als Füllstoff Quarzmehl verwendet wird.

4. Verfahren nach Anspruch 3, **dadurch gekennzeichnet, daß** das Quarzmehl in einer Menge von etwa 10 bis 100 Masse-% verwendet wird.

5. Verfahren nach einem der Ansprüche 1 bis 4, **dadurch gekennzeichnet, daß** als Silan ein Epoxy- oder Amino-Silan verwendet wird.

6. Verfahren nach einem der Ansprüche 1 bis 5, **dadurch gekennzeichnet, daß** der Mischung ein Silan als Haftungsverbesserer zugesetzt wird.

7. Verfahren nach einem der Ansprüche 1 bis 6, **dadurch gekennzeichnet, daß** die Mischung im Siebdruckverfahren aufgebracht wird.

8. Verfahren nach einem der Ansprüche 1 bis 6, **dadurch gekennzeichnet, daß** die Mischung als Raupe aufgetragen wird.

9. Metallische Zylinderkopfdichtung für eine Brennkraftmaschine mit mindestens einem Funktionsblech (1), das mit einer Öffnung (2) oder mehreren nebeneinander angeordneten Öffnungen (2) entsprechend den Brennkammern der Brennkraftmaschine versehen ist, wobei in dem mindestens einen Funktionsblech (1) um jede Öffnung (2) herum mit Abstand zu dieser unter Belassung eines geraden Blechabschnitts (4) im Öffnungsrandbereich eine Sicke (3) vorgesehen ist, für die ein koaxial zur Sicke (3) verlaufender Federwegbegrenzer (5; 5'; 8, 9)gebildet durch eine Überhöhung, vorgesehen ist, wobei eine oder mehrere Überhöhungen vorgesehen sind, wobei die mindestens eine Überhöhung aus einem mit mineralischem Füllstoff stark gefüllten Kunststoff besteht, **dadurch gekennzeichnet, daß** der Kunststoff ein Elastomer, das mit einem mit einem Silan oberflächenbehandelten Füllstoff im Verhältnis Elastomer/Füllstoff von 1:1 bis 1:5 gefüllt ist.

10. Zylinderkopfdichtung nach Anspruch 9, **dadurch gekennzeichnet, daß** das Elastomer ein Fluorkautschuk oder Fluorsilikonkautschuk ist.

11. Zylinderkopfdichtung nach Anspruch 9 oder 10, **dadurch gekennzeichnet, daß** der Füllstoff Quarzmehl ist.

12. Zylinderkopfdichtung nach Anspruch 11, **dadurch gekennzeichnet, daß** das Quarzmehl in einer Menge von etwa 10 bis 100 Masse-% enthalten ist.

13. Zylinderkopfdichtung nach einem der Ansprüche 9 bis 12, **dadurch gekennzeichnet, daß** das Silan ein Epoxy- oder Amino-Silan ist.

14. Zylinderkopfdichtung nach einem der Ansprüche 9 bis 13, **dadurch gekennzeichnet, daß** die Mischung im Siebdruckverfahren aufgebracht ist.

15. Zylinderkopfdichtung nach einem der Ansprüche 9 bis 13, **dadurch gekennzeichnet, daß** die Mischung als Raupe aufgebracht ist.

## Claims

1. Method for applying a raised portion to a metal layer of a metallic cylinder head gasket for an internal combustion engine, with at least one functional plate (1), which is provided with an opening (2) or a number of openings (2) arranged next to one another, corresponding to the combustion chambers of the internal combustion engine, a corrugation (3) being provided in the at least one functional plate (1) around each opening (2), with a spacing with respect to the latter, leaving a straight sheet metal portion (4) in the edge region of the opening, for which corrugation a spring travel limiter (5; 5'; 8, 9) is provided, extending coaxial to the corrugation (3) and formed by the raised portion, the raised portion being produced from a mixture containing a plastic filled with a high proportion of mineral filler, **characterized in that** the mixture of an elastomer with a filler that is surface-treated by means of a silane is used in an elastomer/filler ratio of 1:1 to 1:5.

2. Method according to Claim 1, **characterized in that** fluororubber or fluorosilicone rubber is used as the elastomer.

3. Method according to Claim 1 or 2, **characterized in that** silica flour is used as the filler.

4. Method according to Claim 3, **characterized in that** the silica flour is used in an amount of approximately 10 to 100% by mass.

5. Method according to one of Claims 1 to 4, **characterized in that** an epoxy silane or aminosilane is used as the silane.

6. Method according to one of Claims 1 to 5, **characterized in that** a silane is added to the mixture as an adhesive promoter.

7. Method according to one of Claims 1 to 6, **characterized in that** the mixture is applied by the screen printing process.

8. Method according to one of Claims 1 to 6, **characterized in that** the mixture is applied as a bead.

9. Metallic cylinder head gasket for an internal combustion engine with at least one functional plate (1), which is provided with an opening (2) or a number of openings (2) arranged next to one another, corresponding to the combustion chambers of the internal combustion engine, a corrugation (3) being provided in the at least one functional plate (1) around each opening (2), with a spacing with respect to the latter, leaving a straight sheet metal portion (4) in the edge region of the opening, for which corrugation a spring travel limiter (5; 5'; 8, 9) is provided, extending coaxial to the corrugation (3) and formed by a raised portion, one or more raised portions being provided, the at least one raised portion consisting of a plastic filled with a high proportion of mineral filler, **characterized in that** the plastic is an elastomer which is filled with a filler that is surface-treated with a silane in an elastomer/filler ratio of 1:1 to 1:5.

10. Cylinder head gasket according to Claim 9, **characterized in that** the elastomer is a fluororubber or fluorosilicone rubber.

11. Cylinder head gasket according to Claim 9 or 10, **characterized in that** the filler is silica flour.

12. Cylinder head gasket according to Claim 11, **characterized in that** the silica flour is contained in an amount of approximately 10 to 100% by mass.

13. Cylinder head gasket according to one of Claims 9 to 12, **characterized in that** the silane is an epoxy silane or aminosilane.

14. Cylinder head gasket according to one of Claims 9 to 13, **characterized in that** the mixture is applied by the screen printing process.

15. Cylinder head gasket according to one of Claims 9 to 13, **characterized in that** the mixture is applied as a bead.

## Revendications

1. Procédé pour l'application d'une surélévation sur une plaque métallique d'un joint de culasse métallique pour une machine à combustion interne avec au moins une tôle fonctionnelle (1) munie d'une ouverture (2) ou de plusieurs ouvertures (2) disposées de manière juxtaposée en fonction des chambres à combustion de la machine à combustion interne, un bourrelet (3) étant prévu dans la au moins une tôle fonctionnelle (1) autour de chaque ouverture (2) à distance de celle-ci de façon à laisser libre une section droite de tôle (4) dans la région du bord de l'ouverture, bourrelet pour lequel est prévu un ressort limiteur de course (5; 5'; 8, 9) qui s'étend coaxialement audit bourrelet (3) et qui est formé par la surélévation, ladite surélévation étant réalisée à partir d'un mélange renfermant un matériau plastique fortement chargé avec un matériau de charge minéral, **caractérisé en ce que** le mélange est utilisé à partir d'un élastomère comprenant un matériau de charge traité en surface au moyen d'un silane dans un rapport élastomère/matériau de charge de 1:1 à 1:5.

2. Procédé selon la revendication 1, **caractérisé en ce que** l'on utilise en tant qu'élastomère un fluoro-caoutchouc ou un fluoro-silicone caoutchouc.

3. Procédé selon l'une des revendications 1 ou 2, **caractérisé en ce que** l'on utilise de la poudre de quartz en tant que matériau de charge.

4. Procédé selon la revendication 3, **caractérisé en ce que** la poudre de quartz est utilisée selon une quantité d'approximativement 10 à 100% en masse.

5. Procédé selon l'une des revendications 1 à 4, **caractérisé en ce que** le silane est un époxy- ou un amino-silane.

6. Procédé selon l'une des revendications 1 à 5, **caractérisé en ce que** l'on ajoute au mélange un silane en tant que promoteur d'adhésion.

7. Procédé selon l'une des revendications 1 à 6, **caractérisé en ce que** le mélange est déposé selon le procédé d'impression sérigraphique.

8. Procédé selon l'une des revendications 1 à 6, **caractérisé en ce que** le mélange est déposé en cordon.

9. Joint de culasse métallique pour une machine à combustion interne comprenant au moins une tôle fonctionnelle (1) munie d'une ouverture (2) ou de plusieurs ouvertures (2) disposées de manière juxtaposée en fonction des chambres de combustion de la machine à combustion interne, un bourrelet (3) étant prévu dans la au moins une tôle fonctionnelle (1) autour de chaque ouverture (2) à distance de celle-ci de façon à laisser libre une section droite de tôle (4) dans la région du bord de l'ouverture, bourrelet pour lequel est prévu un ressort limiteur de course (5; 5'; 8, 9) s'étendant coaxialement audit bourrelet (3) et formé par une surélévation, une ou plusieurs surélévations étant prévues, la au moins une surélévation étant réalisée au moyen d'un matériau plastique fortement chargé avec un matériau de charge minéral, **caractérisé en ce que** le matériau plastique est un élastomère qui est chargé avec un matériau de charge traité en surface au moyen d'un silane dans un rapport de 1:1 à 1:5.

10. Joint de culasse selon la revendication 9, **caractérisé en ce que** l'élastomère est un fluoro-caoutchouc ou un fluoro-silicone caoutchouc.

11. Joint de culasse selon l'une des revendications 9 ou 10, **caractérisé en ce que** le matériau de charge est de la poudre de quartz.

12. Joint de culasse selon la revendication 11, **caractérisé en ce que** la poudre de quartz est renfermée selon une quantité d'approximativement 10 à 100% en masse.

13. Joint de culasse selon l'une des revendications 9 à 12, **caractérisé en ce que** le silane est un époxy-silane ou un amino-silane.

14. Joint de culasse selon l'une des revendications 9 à 13, **caractérisé en ce que** le mélange est déposé selon le procédé d'impression sérigraphique.

15. Joint de culasse selon l'une des revendications 9 à 13, **caractérisé en ce que** le mélange est déposé en cordon.
